# EUROPEAN PATENT APPLICATION

(11) **EP 4 344 168 A1**
(43) Date of publication of application: **27.03.2024**
(21) Application number: 22804672.8
(22) Date of filing: 17.05.2022
(51) Int. Cl.: H04L 69/08

(54) **COMMUNICATION DEVICE AND COMMUNICATION SYSTEM**

(30) Priority: 19.05.2021 US 202163190451 P; 10.05.2022 US 202217740865
(71) Applicant: Sony Semiconductor Solutions Corporation, Atsugi-shi, Kanagawa 243-0014 (JP)
(72) Inventor: HYAKUDAI Toshihisa, Paramus. New Jersey 07652 (US); YAMADA Junya, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/020491
(87) International publication number: WO 2022/244761

(57) **Abstract**

To perform high-speed data transmission between a master device and a slave device.

A communication device includes: a communication interface unit configured to receive, from a master, control data including data of a predetermined transmission format of a first protocol which a communication partner device transmits to a slave; a storage unit configured to store the data of the first protocol received by the communication interface unit; an encapsulator configured to convert the data of the first protocol stored in the storage unit into data of a second protocol; and a communication unit configured to transmit the data of the second protocol converted by the encapsulator to the communication partner device.

## Description

### TECHNICAL FIELD

The present disclosure relates to a communication device and a communication system.

### BACKGROUND ART

A technology for performing high-speed serial communication by using a SerDes has been proposed (Patent Document 1). The SerDes is used in various fields, and for example, used for communication between in-vehicle devices.

### CITATION LIST

### PATENT DOCUMENT

Patent Document 1: Japanese Patent Application Laid-Open No. 2011-239011

### SUMMARY OF THE INVENTION

### PROBLEMS TO BE SOLVED BY THE INVENTION

With the development of automated driving technology, there is an increasing need for high-speed communication between in-vehicle devices. In Automotive SerDes Appliance (ASA), high-speed serial communication between a Master SerDes and a Slave SerDes is standardized, but communication between the Master SerDes and a master device and communication between the Slave SerDes and a slave device are not standardized.

For example, in a case where the slave device is an image sensor, inter-integrated circuit (I2C) communication is often performed between the slave device and the Slave SerDes. However, since the existing I2C communication has a low transmission speed, even when the high-speed serial communication is performed between the Master SerDes and the Slave SerDes, in a case where the I2C communication is performed between the slave device and the Slave SerDes, data transmission cannot be performed between the master device and the slave device at a high speed.

Therefore, an object of the present disclosure is to provide a communication device and a communication system in which high-speed data transmission is capable of being performed between a master device and a slave device even in a case where a low-speed communication protocol is used in the midway of a communication path between the master device and the slave device.

### SOLUTIONS TO PROBLEMS

In order to solve the problem described above, according to an aspect of the present disclosure, there is provided a communication device including:
a communication interface unit configured to receive, from a master, control data including data of a predetermined transmission format of a first protocol which a communication partner device transmits to a slave;
a storage unit configured to store the data of the first protocol received by the communication interface unit;
an encapsulator configured to convert the data of the first protocol stored in the storage unit into data of a second protocol; and
a communication unit configured to transmit the data of the second protocol converted by the encapsulator to the communication partner device.

The predetermined transmission format may be a format in which an ACK signal or a NACK signal from the communication partner device is received after transmission of data of multiple bytes to the communication partner device is completed.

The predetermined transmission format of the first protocol may be an I2C bulk mode format defined in an Automotive SerDes Alliance (ASA) standard ver. 1.01.

The storage unit may store the control data including identification information of the encapsulator, the number of pieces of data, and information of the I2C bulk mode format.

A data transmission speed of the communication interface unit may be faster than a data transmission speed between the communication partner device and the slave.

There may be further provided a decapsulator configured to convert the data of the second protocol transmitted from the communication partner device and received by the communication unit into the data of the first protocol and store the converted data in the storage unit.

According to another aspect of the present disclosure, there is provided a communication system including:
a first communication device configured to perform data communication of a first protocol with a master; and
a second communication device configured to perform data communication of a second protocol with the first communication device and perform data communication of the first protocol with a slave,
in which the first communication device includes
a first communication interface unit configured to receive, from the master, control data including data of a predetermined transmission format of the first protocol which the second communication device transmits to the slave,
a first storage unit configured to store the data of the first protocol received by the first communication interface unit,
a first encapsulator configured to convert the data of the first protocol stored in the first storage unit into data of a second protocol, and
a first communication unit configured to transmit the data of the second protocol converted by the first encapsulator to the second communication device.

There may be further provided a first decapsulator configured to convert the data of the second protocol transmitted from the second communication device and received by the first communication unit into the data of the first protocol and store the converted data in the first storage unit.

The predetermined transmission format of the first protocol may be an I2C bulk mode format defined in an ASA standard ver. 1.01.

A data transmission speed of the first communication interface unit may be faster than a data transmission speed between the second communication device and the slave.

The second communication device may include:
a second communication unit configured to receive the data of the second protocol transmitted from the first communication device; and
a second decapsulator configured to convert the data of the second protocol received by the second communication unit into the data of the first protocol; and
a second communication interface unit configured to transmit the data of the first protocol converted by the second decapsulator to the slave.

The second communication device may include a second encapsulator configured to convert the data of the first protocol transmitted by the slave and received by the second communication interface unit into the data of the second protocol, and
the second communication unit may transmit the data of the second protocol converted by the second encapsulator to the first communication device.

The master may include:
a second storage unit configured to store the control data including the data of the first protocol which the second communication device is to transmit to the slave; and
a third communication interface unit configured to transmit the control data stored in the second storage unit to the first communication device.

There may be further provided an internal slave incorporated in the second communication device and directly controlled by the master,
in which the second communication device may include a third storage unit configured to store data for the master to directly control the internal slave.

The third storage unit may store the data of the first protocol to be transmitted to the slave.

The first communication device may include:
a third encapsulator configured to convert data from the master, which is stored in the first storage unit, into the data of the second protocol; and
a third decapsulator configured to perform protocol conversion on data of the internal slave, which is received by the first communication unit and read from the third storage unit, and
the second communication device may store data output from the third encapsulator in the third storage unit.

According to still another aspect of the present disclosure, there is provided a communication method including:
by communication interface unit, receiving, from a master, control data including data of a predetermined transmission format of a first protocol which a communication partner device transmits to a slave;
storing the data of the first protocol received by the communication interface unit in a storage unit;
converting the data of the first protocol stored in the storage unit into data of a second protocol; and
transmitting the converted data of the second protocol to the communication partner device.

### BRIEF DESCRIPTION OF DRAWINGS

Fig. 1 is a block diagram illustrating a basic configuration as a base of a communication system according to the present disclosure.
Fig. 2 is a diagram illustrating a general write sequence of I2C.
Fig. 3 is a diagram illustrating an I2C bulk mode format.
Fig. 4 is a diagram illustrating a data configuration of an I2C bulk mode format.
Fig. 5 is a diagram illustrating configurations of data and a packet, which are generated by each unit in a SerDes #1.
Fig. 6 is a block diagram illustrating a schematic configuration of a communication system including a communication device according to a first embodiment.
Fig. 7A is a flowchart illustrating a processing procedure of the communication system in Fig. 6.
Fig. 7B is a flowchart subsequent to Fig. 7A.
Fig. 8 is a diagram illustrating a memory map configuration in a case where data of an I2C bulk mode format is stored in a memory.
Fig. 9 is a diagram illustrating a data configuration in a case where data of an I2C bulk mode format is stored in a buffer memory.
Fig. 10 is a block diagram illustrating a schematic configuration of a communication system including a communication device according to a second embodiment.
Fig. 11 is a diagram illustrating an example of address mapping of a register.
Fig. 12 is a diagram illustrating a data configuration of a memory write/read command packet format transmitted from a SerDes #1.
Fig. 13 is a diagram illustrating a data configuration of a memory write/read command stored in a memory of an ECU.
Fig. 14 is a diagram illustrating a data configuration of a memory write/read command stored in a buffer memory of a SerDes #1.
Fig. 15A is a flowchart illustrating a processing procedure of a communication system according to the second embodiment.
Fig. 15B is a flowchart subsequent to Fig. 15A.
Fig. 16 is a diagram illustrating a memory map when an ECU according to a third embodiment writes data of an I2C bulk mode format to a memory.
Fig. 17A is a flowchart illustrating a processing procedure of a communication system according to the third embodiment.
Fig. 17B is a flowchart subsequent to Fig. 17A.
Fig. 18 is a block diagram illustrating a schematic configuration of a communication system including a communication device according to a fourth embodiment.

### MODE FOR CARRYING OUT THE INVENTION

Hereinafter, embodiments of a communication device and a communication system will be described with reference to the drawings. Although main components of the communication device and communication system will be mainly described below, the communication device and the communication system may have components and functions that are not illustrated or described. The following description does not exclude the components and functions that are not illustrated or described.

### (Basic Configuration of Communication System)

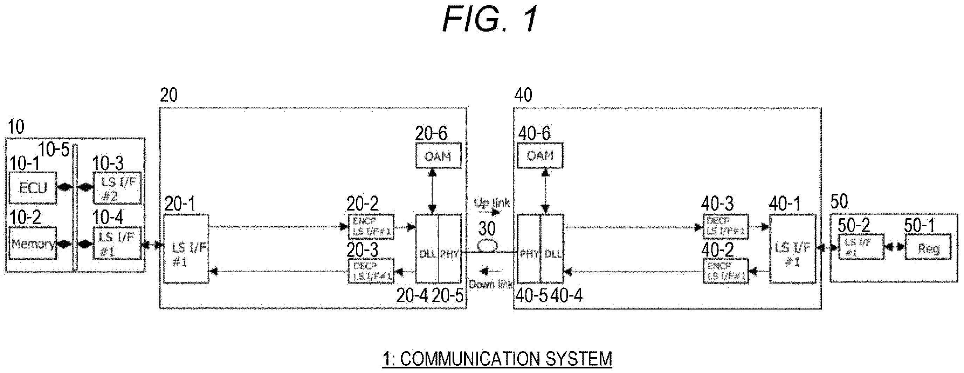

Fig. 1 is a block diagram illustrating a basic configuration as a base of a communication system 1 according to the present disclosure. The communication system 1 in Fig. 1 configures a part of an advanced driver assistance system (ADAS). The communication system 1 in Fig. 1 includes a Master SerDes 20, a Slave SerDes 40, a master device 10, and a slave device 50.

The Master SerDes 20 and the Slave SerDes 40 perform high-speed serial communication according to, for example, a predetermined communication standard (second protocol). The predetermined communication standard is, for example, FPD-Link, A-phy, ASA, or the like. Hereinafter, an example in which the master device 10 and the Master SerDes 20 perform high-speed serial communication in compliance with the ASA which is a high-speed interface standard will be mainly described.

In the present description, the Master SerDes 20 may be referred to as a communication device, a first communication device, or a SerDes #1 20, and the Slave SerDes 40 may be referred to as a second communication device or a SerDes #2 40.

The SerDes #1 20 performs data transmission with the master device 10. Hereinafter, an example in which the master device 10 is a vehicle control ECU 10 will be mainly described. The ECU 10 controls the entire communication system 1 of Fig. 1. The ECU 10 and the SerDes #1 20 perform serial transmission using a relatively low-speed communication protocol such as I2C or GPIO.

The ECU 10 includes an ECU core 10-1, a memory 10-2, a first low-speed interface unit (LS I/F #1) 10-4, and a second low-speed interface unit (LS I/F #2) 10-3. In the memory 10-2, a register setting value for the ECU 10 to set the operation of the slave device 50 is stored in advance.

Hereinafter, an example in which the slave device 50 is a sensor 50 (for example, an image sensor) will be mainly described, but the type of slave device 50 is not limited. The register setting value which the ECU 10 stores in the memory 10-2 is set in a control register of the sensor 50 via the SerDes #1 20 and the SerDes #2 40 when the power is turned on or the like. In this manner, the ECU 10 can control the operation of the sensor 50 by using the register setting value stored in the memory 10-2.

The SerDes #1 20 includes a low-speed interface unit (LS I/F #1) 20-1, an encapsulator (ENCP LS I/F #1) 20-2, a decapsulator (DECP LS I/F #2) 20-3, an CAM (Operation, Administration, Maintenance) 20-6, a DLL 20-4, and a PHY 20-5.

The SerDes #2 40 includes a PHY 40-5, a DLL 40-4, an OAM unit 40-6, a decapsulator (DECP LS I/F #1) 40-3, a low-speed interface unit (LS I/F #1) 40-1, and an encapsulator (ENCP LS I/F #2) 40-2.

The sensor 50 which is the slave device 50 includes a low-speed interface unit (LS I/F #1) 50-2 and a register 50-1. The sensor 50 has an I2C communication function. ASA standard ver. 1.01 stipulates that I2C is used as a low-speed communication protocol, and describes a method of converting an I2C signal format into an ASA standard communication protocol. The processing of converting the I2C communication protocol into the ASA communication protocol is performed by the ENCP LS I/F #1 20-2 in the SerDes #1 20 and the ENCP LS I/F #1 40-2 in the SerDes #2 40.

The LS I/F #1 20-1 in the SerDes #1 20 performs serial communication with the LS I/F #1 10-4 in the ECU 10 according to a predetermined protocol (for example, I2C). The ENCP LS I/F #1 20-2 in the SerDes #1 20 converts data received by the LS I/F #1 20-1 into an ASA-compliant protocol and generates a packet. The DLL 20-4 generates an uplink packet by collecting a packet from the ENCP LS I/F #1 20-2 and other transmission packets (including the OAM 20-6) and transfers the uplink packet to the PHY 20-5. The PHY 20-5 outputs the uplink packet to a cable 30 according to an uplink output timing by time division duplex (TDD).

The uplink packet transmitted from the SerDes #1 20 is transferred to the DLL 40-4 via the PHY 40-5 in the SerDes #2 40. The DLL 40-4 extracts a packet for the sensor 50 from the uplink packet and transmits the packet to the DECP LS I/F #1 40-3. The DECP LS I/F #1 40-3 transmits, to the LS I/F #1 40-1, data for I2C obtained by performing protocol conversion on a packet for the sensor 50. The LS I/F #1 40-1 transmits the data from the DECP LS I/D #1 40-3 to the sensor 50.

The data transmitted by the ECU 10 is stored in the register 50-1 of the sensor 50 via the SerDes #1 20 and the SerDes #2 40.

When receiving the data from the ECU 10, the sensor 50 transmits data responding to the data to the SerDes #2 40 through, for example, I2C communication. The LS I/F #1 40-1 in the SerDes #2 40 transmits the received data to the ENCP LS I/F #1 40-2. The ENCP LS #1 40-2 converts the received data into an ASA-compliant protocol to generate a packet. The DLL 40-4 generates a downlink packet including the packet from the ENCP LS #1 40-2. The downlink packet is transmitted to the SerDes #1 20 via the PHY 40-5.

When receiving the downlink packet, the PHY 20-5 in the SerDes #1 20 transfers the downlink packet to the DLL 20-4. The DLL 20-4 decomposes the downlink packet and transmits a packet for an ECU 10 to the DECP LS I/F #1 20-3. The DECP LS I/F #1 20-3 performs protocol conversion on the packet for an ECU 10, for example, generates data for I2C and transmits the data for I2C to the LS I/F #1 20-1. The LS I/F #1 10-4 in the ECU 10 receives data transmitted from the LS I/F #1 20-1 in the SerDes #1 20 by I2C communication, and stores the data in the memory 10-2.

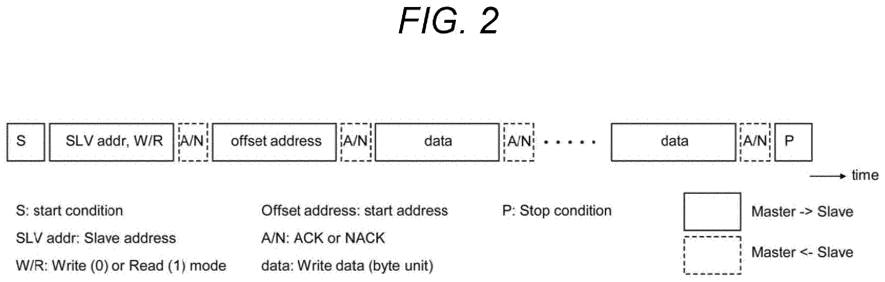

Fig. 2 is a diagram illustrating a general write sequence of I2C. The ECU 10 that performs I2C communication issues a Start condition, and subsequently issues a slave address (7 bits) indicating an I2C communication party and 1 bit indicating a write/read operation. In response to this, the sensor 50 of I2C, which is the communication partner of I2C indicated by the slave address, returns an acknowledgement (ACK).

After receiving the ACK from the sensor 50 that performs the I2C communication, in a write mode, the ECU 10 issues an offset address (byte unit) indicating an address of the register 50-1 of the sensor 50 to which data is to be written. In response to this, the sensor 50 returns the acknowledgement (ACK). Thereafter, the ECU 10 issues write data in byte units. The sensor 50 returns the acknowledgment (ACK) every time the data is received in byte units. The ECU 10 and the sensor 50 repeatedly perform the data write operation until a desired number of pieces of data is written. After writing the last data, the ECU 10 issues Stop condition and ends the I2C communication.

The above-described operation is performed between the LS I/F #1 10-4 of the ECU 10 in Fig. 1 and the LS I/F #1 20-1 of the SerDes #1 20, and between the LS I/F #1 40-1 of the SerDes #2 40 and the LS I/F #1 50-2 of the slave (sensor) 50.

In the ASA standard, when I2C data is transferred to and from the SerDes 20 or 40, not only an I2C byte mode in which data is transferred for each byte like normal I2C, but also a transfer mode referred to as an I2C bulk mode in which a plurality of pieces of data is collectively transferred is defined. In the I2C bulk mode, the ECU 10 collectively transmits ACK/NACK signals to the sensor 50 in multiple bytes without receiving the ACK/NACK signals from the sensor 50 for each byte. The ECU 10 also collectively receives the ACK/NACK signals from the sensor 50, and thus data transmission with the sensor 50 can be performed. Therefore, the data transmission speed can be dramatically improved.

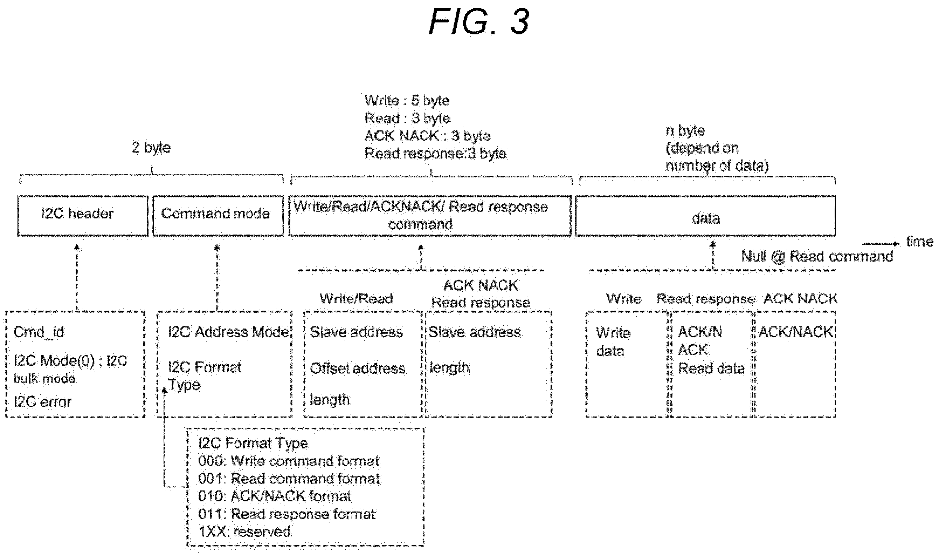

Fig. 3 is a diagram illustrating an I2C bulk mode format. The I2C bulk mode format includes I2C header, Command mode, Write/Read/ACKNACK/Read response command, and data.

The I2C header includes cmd_id indicating a command ID, I2C Mode indicating a transfer mode (I2C bulk mode or I2C byte mode), and I2C error indicating an I2C bus error state.

The Command mode includes I2C address mode indicating whether or not an offset address of a write register is designated, and I2C format type indicating whether a command to be transmitted is Write or Read, ACK/NACK return, or Read data for a read command (read response).

The Write/Read/ACKNACK/Read response command has different contents according to the command selected in the I2C format type. In a case of the Write command or the Read command, a content includes I2C slave address to be written, offset address, and the number of bytes of write or read data. In a case of the ACK/NACK command or the Read response command, the content includes Slave address indicated by the Write/Read command and the number of bytes of the received data from the Slave.

In the data, each of the commands includes Write data, Read data, or ACK/NACK data.

Next, an operation in a case where the ECU 10 transmits data to the sensor 50 in the I2C bulk mode in the communication system 1 of Fig. 1 will be described.

The ECU 10 transmits control data for controlling the sensor 50 to the register 50-1 in the I2C bulk mode. Therefore, the ECU core 10-1 controls the LS I/F #1 10-4 that performs the I2C communication, and starts the I2C communication with the SerDes #1 20. The LS I/F #1 10-4 outputs the slave address and offset address of the SerDes #1 20 according to an I2C write sequence. Thereafter, the ECU core 10-1 generates a write command including the I2C slave address, offset address, and write data of the sensor 50 according to the I2C bulk mode format illustrated in Fig. 3, sequentially inputs the write command to a data portion of the I2C write sequence in byte units, and transmits the write command to the LS I/F #1 20-1 of the SerDes #1 20.

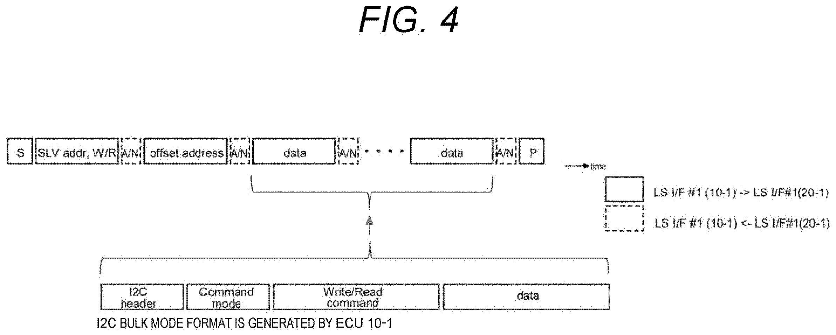

Fig. 4 is a diagram illustrating a data configuration of the I2C bulk mode format which the ECU 10 transmits to the SerDes #1 20 by using a normal I2C writing procedure. The I2C bulk mode format includes a data area data after Slave address and Offset address. The data area data includes I2C header, Command mode, Write/Read command, and data.

The LS I/F #1 20-1 in the SerDes #1 20 sequentially outputs the received I2C data to the ECNP LS I/F #1 20-2. The ECNP LS I/F #1 20-2 can recognize that the received data format is the I2C bulk mode by interpreting mode information of the I2C header. In a case where the I2C bulk mode is described in the I2C header, subsequent data is processed with the I2C bulk mode. After receiving all the data in the I2C bulk mode, the SerDes #1 20 collectively stores the data in packet payload of the packet format as the I2C bulk mode format illustrated in Fig. 3.

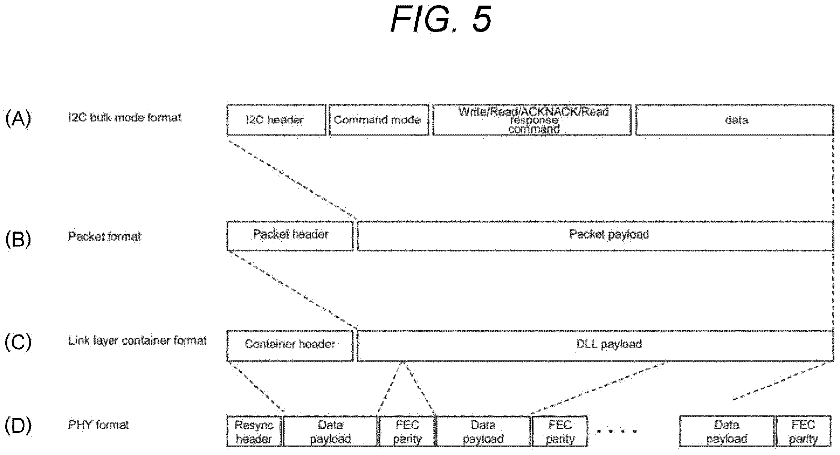

Fig. 5 is a diagram illustrating configurations of data and a packet, which are generated by each unit in the SerDes #1 20. Fig. 5(A) is a diagram illustrating an I2C bulk mode format, Fig. 5(B) is a diagram illustrating a packet format generated by the ENCP LS I/F #1 20-2, Fig. 5(C) is a diagram illustrating a link layer container format generated by the DLL 20-4, and Fig. 5(D) is a diagram illustrating a PHY format generated by the PHY 20-5.

As illustrated in Fig. 5(B), the ENCP LS I/F #1 20-2 generates a packet format including Packet header indicating a packet type and the like and Packet payload including the I2C bulk mode format.

The ENCP LS I/F #1 20-2 outputs the packet format to the DLL 20-4. The DLL 20-4 generates the link layer container format on the basis of the received packet format illustrated in Fig. 5B.

As illustrated in Fig. 5(C), the link layer container format includes Container header and DLL payload. The Container header includes output destination information of a packet. The DLL payload includes the link layer container format of Fig. 5(B).

The DLL 20-4 further generates a link layer container format (Fig. 5(C)) in which an CAM packet including a system control register is stored in the Packet payload, and outputs the link layer container format (Fig. 5(C)) to the PHY 20-5.

The PHY 20-5 converts the link layer container format (Fig. 5(C)) into a PHY format (Fig. 5(D)) according to the ASA standard. Moreover, the PHY 20-5 outputs the PHY format (Fig. 5(D)) to the SerDes #2 40 via the cable 30 through uplink communication.

The PHY 40-5 of the SerDes #2 40 extracts the link layer container format (Fig. 5(C)) from the received PHY format (Fig. 5(D)) and outputs the extracted link layer container format to the DLL 40-4.

The DLL 40-4 analyzes the Container header of the link layer container format (Fig. 5(C)) and recognizes that the DLL payload stores data to be output to the DECP LS I/F #1 40-3. In accordance with this, the DLL 40-4 outputs the DLL payload (Fig. 5(C)) to the DECP LS I/F #1 40-3.

The DECP LS I/F #1 40-3 analyzes the Packet payload (Fig. 5(B)), recognizes that the I2C bulk mode is transferred from the I2C header (Fig. 3), further, analyzes the Command mode (Fig. 3), and recognizes that it is a Write command. Moreover, the subsequent Write command (Fig. 3) is analyzed, and the I2C slave address of an I2C communication destination, the offset address of the register, and a data length are recognized. Thus, the DECP LS I/F #1 40-3 can correctly recognize all the write data.

The DECP LS I/F #1 40-3 controls the LS I/F #1 40-1 from these pieces of information, and starts I2C communication with the sensor 50. Since the I2C communication is performed according to a write sequence, the I2C format of Fig. 2 is used.

The LS I/F #1 40-1 performs I2C communication with the LS I/F #1 50-2 of the sensor 50, and sequentially transfers data.

The LS I/F #1 50-2 of the sensor 50 sequentially writes the received data to the register 50-1. At the same time, the LS I/F #1 50-2 returns, to the LS I/F #1 40-1, an ACK signal indicating that reception is has been performed correctly for each byte (Fig. 2).

The ENCP LS I/F #1 40-2 of the SerDes #2 40 stores the ACK signal returned by the LS I/F #1 50-2 of the sensor 50 in the current I2C communication. When the I2C communication ends, the ENCP LS I/F #1 40-2 generates an ACK NACK command in the I2C bulk mode (Fig. 3), stores all the ACK NACK signals in data, and outputs the ACK NACK command to the DLL 40-4 as the packet format (Fig. 5(B)).

The DLL 40-4 stores the packet format in the Payload of the link layer container format and outputs the link layer container format (Fig. 5(C)) to the PHY 40-5. The DLL 40-4 also generates a link layer container format (Fig. 5(C)) storing an CAM packet, and outputs the link layer container format to the PHY 40-5.

The PHY 40-5 converts the link layer container format (Fig. 5(C)) into the PHY format (Fig. 5(D)). The PHY 40-5 outputs the PHY format (Fig. 5(D)) to the SerDes #1 20 through downlink communication. The PHY 20-5 of the SerDes #1 20 receives the PHY format (Fig. 5(D)), extracts the link layer container format (Fig. 5(C)) from Data payload, and outputs the extracted link layer container format to the DLL 20-4.

The DLL 20-4 analyzes the Container header (Fig. 5(C)) and outputs the DLL payload to the DECP I/F #1 20-3 according to this.

The DECP I/F #1 20-3 analyzes the I2C header and the Command mode of the I2C header (Fig. 5(A)) and recognizes that it is the ACK/NACK command. Thereafter, all the ACKNACK data during the I2C communication with the sensor 50 are acquired by data (Fig. 5(A) and Fig. 3).

After the I2C communication for writing the register data to the sensor 50 via the SerDes #1 20 and the SerDes #2 40 is completed, and an appropriate time elapses, the ECU 10 reads the ACK/NACK data held by the DECP LS I/F #1 20-3 through the I2C communication between the LS I/F #1 10-4 and the LS I/F #1 20-1 in order to confirm whether the data is correctly written, and recognizes that the register has been correctly set in the sensor 50.

In the above-described operation, the ECU 10 can perform register setting for controlling the operation of the sensor 50. In the I2C bulk mode, it is not necessary to exchange the ACK/NACK signal indicating that the data has been received for each byte of data between the SerDes #1 20 and the SerDes #2 40. Therefore, the transmission speed of the I2C data can be improved, but since the ECU 10 and the SerDes #1 20, and the SerDes #2 40 and the sensor 50 are connected by low-speed I2C, the I2C communication becomes a bottleneck of the transmission speed.

For example, the bottleneck of the data transmission speed can be eliminated by changing the interface between the ECU 10 and the SerDes #1 20 to a serial peripheral interface (SPI) or the like faster than the I2C. However, in a general image sensor 50, I2C is often used as a control interface, and in a camera module to which the image sensor 50, a temperature sensor, a power supply IC, and the like are connected, these devices are generally connected by an I2C bus and controlled by the I2C via the image sensor 50 from the ECU 10 side. For this reason, when the control interface on the ECU 10 side is changed to a high-speed interface such as the SPI, the control interfaces on the ECU 10 side and the sensor 50 side are different from each other, and thus compatibility between the control interfaces becomes a problem.

In a communication device and a communication system 1 according to the present disclosure to be described below, control data can be transmitted at a high speed between a sensor 50 using control data of I2C transmission method defined in an ASA standard ver 1.01 and an ECU 10 that transmits the control data to the sensor 50 by using an I/F faster than the I2C.

### (First Embodiment)

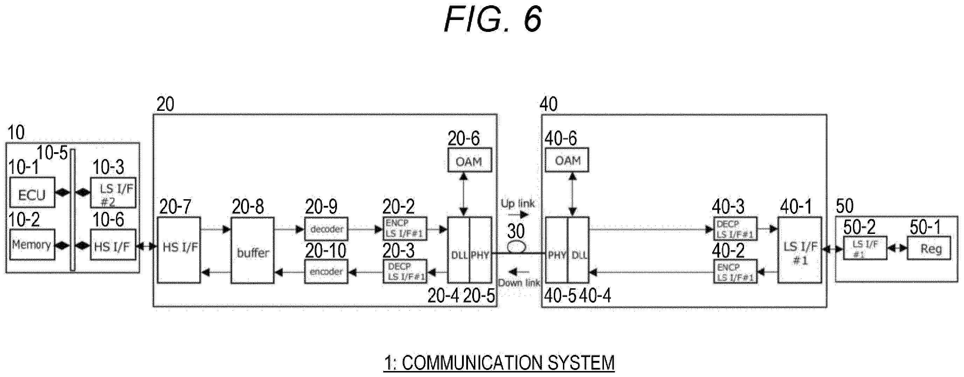

Fig. 6 is a block diagram illustrating a schematic configuration of a communication system 1 including a communication device according to a first embodiment. In Fig. 6, components common to those in Fig. 1 are denoted by the same reference numerals, and differences will be mainly described below.

The ECU 10 of Fig. 6 includes an HS I/F 10-6 of a higher-speed signal protocol instead of the low-speed LS I/F #1 10-4.

In the similar manner, instead of the LS I/F #1 20-1, the SerDes #1 20 includes the same type of high-speed interface HS I/F 20-7 for connection with the HS I/F 10-6. Furthermore, the SerDes #1 20 includes a buffer memory 20-8 that temporarily holds data transmitted and received by the HS I/F 20-7, a decoder 20-9 that processes data received by the HS I/F 20-7, and an encoder 20-10 that processes data to be transmitted to the HS I/F 20-7. Hereinafter, the buffer memory 20-8 may be referred to as a buffer memory 20-8.

The SerDes #1 20 includes a communication interface that receives, from the ECU 10, control data including data of a predetermined transmission format of a first protocol (for example, an I2C communication protocol) transmitted from the SerDes #2 40 to the sensor 50. The predetermined transmission format is, for example, an I2C bulk mode format. This communication interface is an interface capable of performing data transmission at a higher speed than an interface of normal I2C communication.

IDs are respectively preset to the ENCP LS I/F #1 20-2 and the DECP LS I/F #1 20-3 in the SerDes #1 20. The ECU 10 obtains the information in advance. Hereinafter, as an example, an example in which the ID of the ENCP LS I/F #1 is "ENCP LS I/F #1" itself will be described.

The ECU 10 performs processing of writing control data to the register 50-1 of the sensor 50 via the SerDes #1 20 and the SerDes #2 40 by using an I2C bulk mode defined in an ASA standard version 1.01.

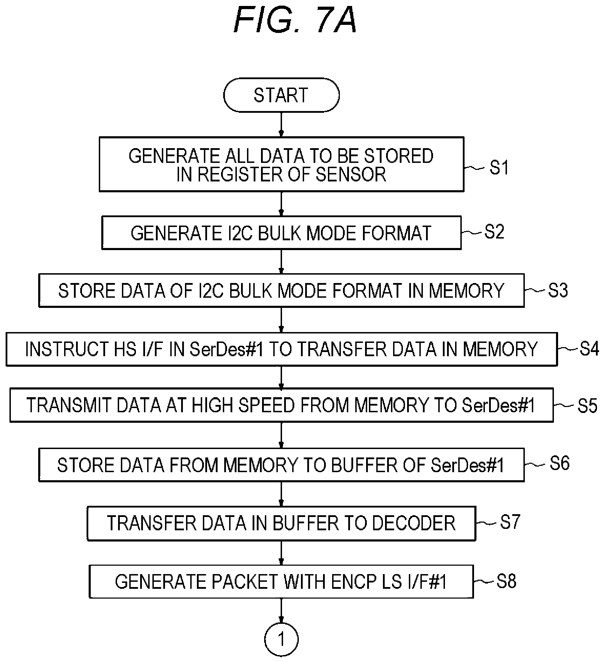

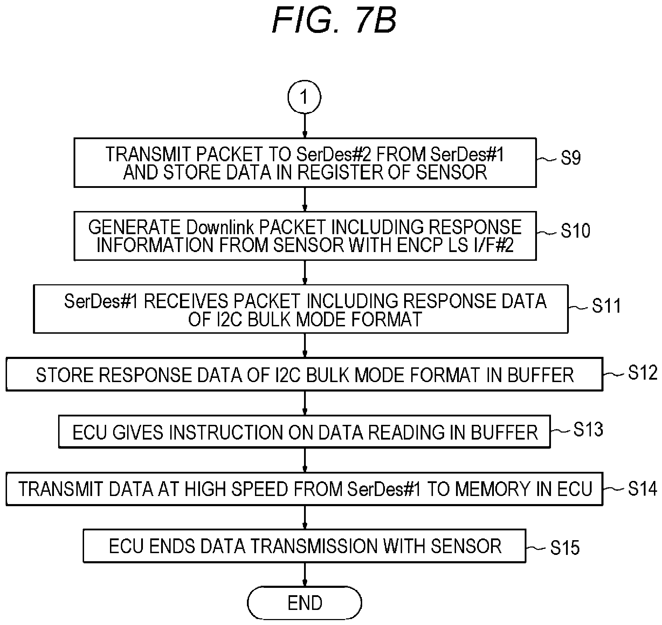

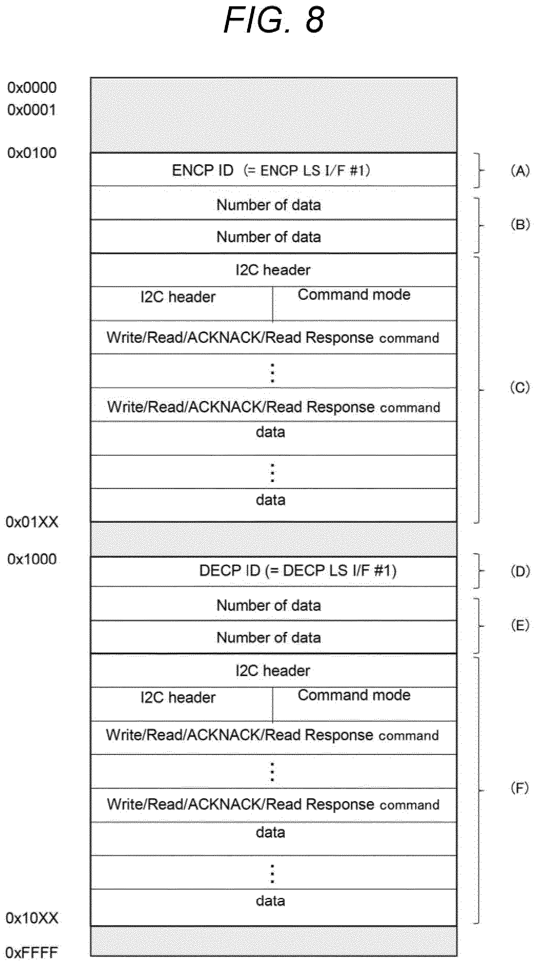

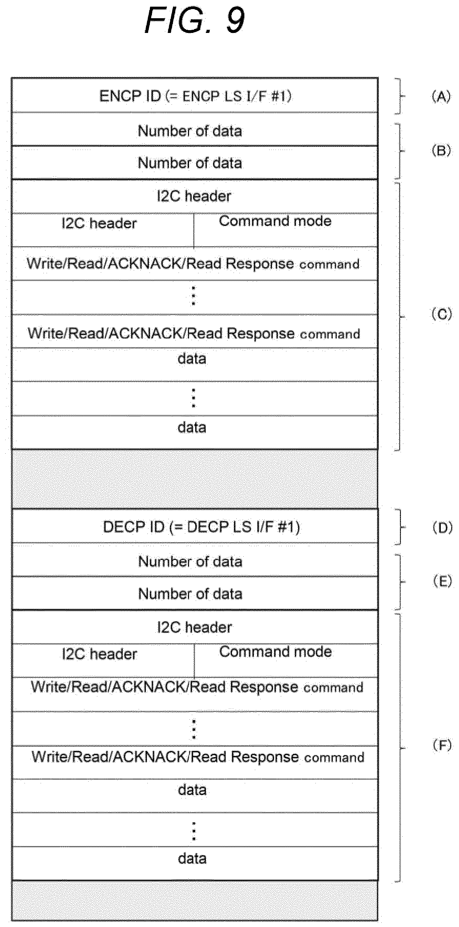

Figs. 7A and 7B are flowcharts illustrating a processing procedure of the communication system 1 of Fig. 6, Fig. 8 is a diagram illustrating a memory map configuration in a case where data of the I2C bulk mode format is stored in the memory 10-2 in the ECU 10-1, and Fig. 9 is a data configuration diagram in a case where data of the I2C bulk mode format is stored in the buffer memory 20-8 in the SerDes #1.

First, the ECU 10 generates all data to be written in the register 50-1 of the sensor 50 (step S1).

Next, the ECU 10 generates the I2C bulk mode format illustrated in Fig. 3 in the Write command mode (I2C format type (000)), and generates data for storing the Slave address of the sensor 50, the Offset address indicating a write destination address of the register 50-1, and length information indicating the number of pieces of write data in a corresponding place of the register 50-1. Moreover, the head data is stored in a data area of the I2C bulk mode format (step S2).

The ECU 10 stores ENCP ID (Fig. 8(A)) of the SerDes #1 20 that transmits the I2C bulk mode format, the number of pieces of data of the entire I2C bulk mode format (Fig. 8(B)), and the I2C bulk mode format (Fig. 8(C)) generated in step S2 in the memory 10-2 (step S3). The address of the memory 10-2 in Fig. 8 is for convenience and can be arbitrarily selected.

The ECU 10 instructs the HS I/F 10-6 in the SerDes #1 20 to transfer the data from 0x0100 to 0x01XX on the memory 10-2 (step S4). The HS I/F 10-6 extracts data of 0x0100 to 0x01XX from the memory 10-2, and sequentially outputs the data according to a HS I/F protocol (step S5). The HS I/F 20-7 of the SerDes #1 20 sequentially receives data from the HS I/F 10-6 and stores the data in the buffer memory 20-8 (step S6).

As can be seen from a comparison between Fig. 8 and Fig. 9, data having the same data configuration as that of the memory 10-2 in the ECU 10 is stored in the buffer memory 20-8 in the SerDes #1.

Next, the decoder 20-9 in the SerDes #1 20 reads data from the buffer memory 20-8 (step S7). At this time, the decoder 20-9 analyzes the ENCP ID (Fig. 8A) described at the head of the I2C bulk mode format, and outputs data to the ENCP LS I/F #1 20-2 with ENCP ID = ENCP LS I/F #1. Although not illustrated, also in a case where a plurality of ENCPs is present, the data output destination is selected with the ENCP ID of the I2C bulk mode format.

The decoder 20-9 reads the number of pieces of data indicated by Number of data (Fig. 8B) from the buffer memory 20-8, and outputs the number of pieces of data to the ENCP LS I/F #1 20-2. In the operation so far, data necessary for the I2C bulk mode can be transferred to the ENCP LS I/F #1.

The ENCP LS I/F #1 20-2 stores the received I2C bulk mode format (Fig. 8(C)) in the Packet payload of the packet format (Fig. 5(B)), attaches the Packet header indicating a packet type or the like, generates the packet format (Fig. 5(B)), and outputs the packet format to the DLL 20-4 (step S8).

The operation procedure until the DLL 20-4 writes data to the register 50-1 of the sensor 50 after the DLL 20-4 receives the packet format (Fig. 5(B)) is the same as the general serial communication of the ASA (step S9).

On the other hand, the ACK/NACK response at the time of the I2C communication of the sensor 50 is also performed by the LS I/F #1 40-1, the ENCP LS I/F #1 40-2, DLL 40-4, and PHY 40-5 of the SerDes #2 40, and the PHY format illustrated in Fig. 5(D) is output through the down link (step S10).

In the similar manner to the general serial communication of the ASA, the PHY 20-5, DLL 20-4, and DECP LS I/F #1 (20-3) of the SerDes #1 20 receive the PHY format (Fig. 5(D)) from the SerDes #2 and acquire the I2C bulk mode format (Fig. 5(A)) as the ACK/NACK format (step S11).

The encoder 20-10 acquires the I2C bulk mode format (Fig. 5(A)) from the DECP LS I/F #1 20-3, generates DECP ID (here, the DECP LS I/F #1 20-3) (Fig. 9(D)) and Number of data (Fig. 9(E)) of the I2C bulk mode format (Fig. 5(A)), and outputs the DECP ID and the Number of data to a memory area of the buffer memory 20-8 allocated in advance together with the I2C bulk mode format (Fig. 9(F)) (Fig. 9 and step S12) .

When the ECU 10 measures a predetermined time with a watchdog timer or the like, and an appropriate time has elapsed, the ECU 10 instructs the HS I/F 10-6 to read the I2C bulk mode (Fig. 9(F)) which is the ACK/NACK format as the I2C write result from the buffer memory 20-8 of the SerDes #20 via the HS I/F 20-7 (step S13).

The HS IF 10-6 reads the DECP ID (Fig. 9(D)), the Number of data (Fig. 9(E)), and the I2C bulk mode (Fig. 9(F)) from the buffer memory 20-8 via the HS IF 20-7, and writes the read data to a predetermined area of the memory 10-2 (Figs. 8(D), 8(E), 8(F), and step S14).

The ECU 10 confirms that the data is returned from a desired DECP on the basis of the DECP ID (Fig. 8(D)) and Number of data (Fig. 8(E)) on the memory 10-2, acquires an ACK/NACK result stored in the data area (Fig. 8(F)), confirms that the control data is transferred to the register 50-1 of the sensor 50, and ends control data transmission operation (step S15).

Note that although the example in which in step S13, the ECU 10 starts the read operation of the buffer memory 20-8 by using the watchdog timer has been described, an interrupt signal may be transmitted from the SerDes #1 20 to the ECU 10 when data (Figs. 9(D), 9(E), and 9(F)) to be read to the buffer memory 20-8 is prepared, and the ECU 10 may start the read operation of the buffer memory 20-8 with the reception of the interrupt signal as a trigger.

Furthermore, in the present description, the I2C bulk mode format is stored in the memory 10-2 and transmitted, but a similar procedure can be applied to another format (for example, GPIO) stored in the Packet payload of the packet format (Fig. 5(B)).

As described above, in the first embodiment, the ECU 10 stores, in the memory 10-2, data of the I2C bulk mode format to be transmitted to the sensor 50, and transmits the data in the memory 10-2 to the SerDes #1 via the HS I/F 10-6 that is a high-speed interface. The ENCP LS I/F #1 20-2 in the SerDes #1 generates an ASA-compliant packet including the received data of the I2C bulk mode format and transmits the ASA-compliant packet to the SerDes #2 via the DLL 20-4 and the PHY 20-5. The DECP LS I/F #1 40-3 in the SerDes #2 extracts data of the I2C bulk mode format from the received packet and transmits the data to the sensor 50 via the LS I/F #1 40-1.

According to the first embodiment, since the data of the I2C bulk mode format is transmitted at a high speed between the ECU 10 and the SerDes #1 20, even the sensor 50 that performs the I2C communication can transmit the control data from the ECU 10 to the sensor 50 at a high speed.

### (Second Embodiment)

In a communication system 1 according to a second embodiment, the sensor 50 which is the slave device 50 includes the SerDes #2 40.

Since the sensor 50 includes the SerDes #2 40, the ECU 10 can set control data in the control register of the sensor 50 without using the normal I2C communication or a low-speed interface as in the first embodiment. This means that the restriction of the data transfer speed due to the I2C, which is a problem caused when the ECU 10 controls the sensor 50, can be completely eliminated.

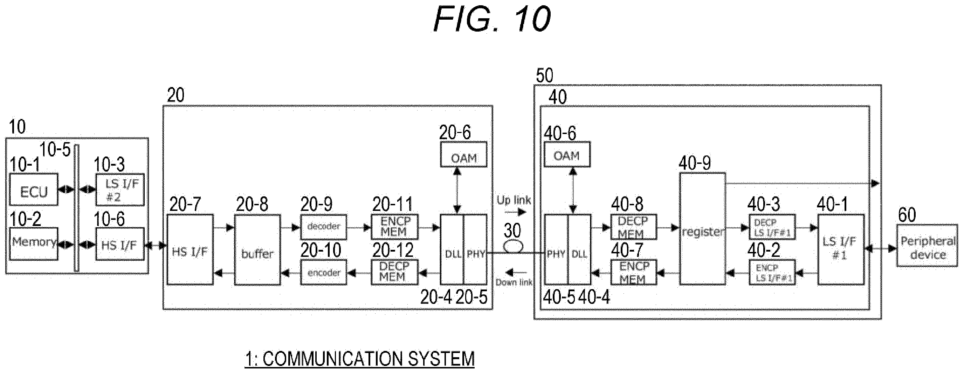

Fig. 10 is a block diagram illustrating a schematic configuration of the communication system 1 including a communication device according to the second embodiment. In Fig. 10, components common to those in Fig. 6 are denoted by the same reference numerals, and differences will be mainly described below.

The communication system 1 of Fig. 10 includes an ECU 10 having the same configuration as that of Fig. 6, a SerDes #1 20 having a configuration different from that of Fig. 6, and a SerDes #2 40 having a configuration different from that of Fig. 6. The SerDes #2 40 is incorporated in the sensor 50. As illustrated in Fig. 10, a peripheral device 60 may be connected to the sensor 50.

The SerDes #1 20 of Fig. 10 includes an encapsulator ENCP MEM 20-11 and a decapsulator DECP MEM 20-12 instead of the ENCP LS I/F #1 20-2 and the DECP LS I/F #1 20-3 in the SerDes #1 20 of Fig. 6. Other configurations are the same as those of the SerDes #1 20 in Fig. 6.

Similarly to the SerDes #2 40 of Fig. 6, the SerDes #2 40 of Fig. 10 includes an LS I/F #1 40-1, an ENCP LS I/F #1 40-2, a DECP LS I/F #1 40-3, a DLL 40-4, a PHY 40-5, and an OAM 40-6. In addition, the SerDes #2 40 of Fig. 10 includes an ENCP MEM 40-7, a DECP MEM 40-8, and a register 40-9 as configurations not included in the SerDes #2 40 of Fig. 6.

The register 40-9 holds, for example, a setting value for controlling the sensor 50. Furthermore, the register 40-9 stores data of the I2C bulk mode format to be transmitted to the peripheral device 60 connected via the LS I/F #1 40-1.

The ENCP MEM 20-11 in the SerDes #1 20 generates a packet for the ENC 10 to transmit data directly to the registers 40-9 in the SerDes #2 40. The DECP MEM 20-12 extracts data of the I2C bulk mode format from the sensor 50 from the downlink packets transmitted from the SerDes #2 40 and received by the PHY 20-5 and the DLL 20-4.

The DECP MEM 40-8 in the SerDes #2 40 incorporated in the sensor 50 extracts data of the I2C bulk mode format included in the packet from the SerDes #1 20 and stores the data in the register 40-9. The ENCP MEM 40-7 reads data of the sensor 50 or the peripheral device 60, which is stored in the register 40-9, generates an ASA-compliant packet, and transmits the packet to the DLL 40-4.

The DECP LS I/F #1 40-3 extracts data of the I2C bulk mode format from the ECU 10, which is stored in the register 40-9, and transmits the data to the peripheral device 60 via the LS I/F #1 40-1. The ENCP LS I/F #1 40-2 receives the data transmitted from the peripheral device 60 through the I2C communication via the LS I/F #1 40-1 and converts the data into a packet.

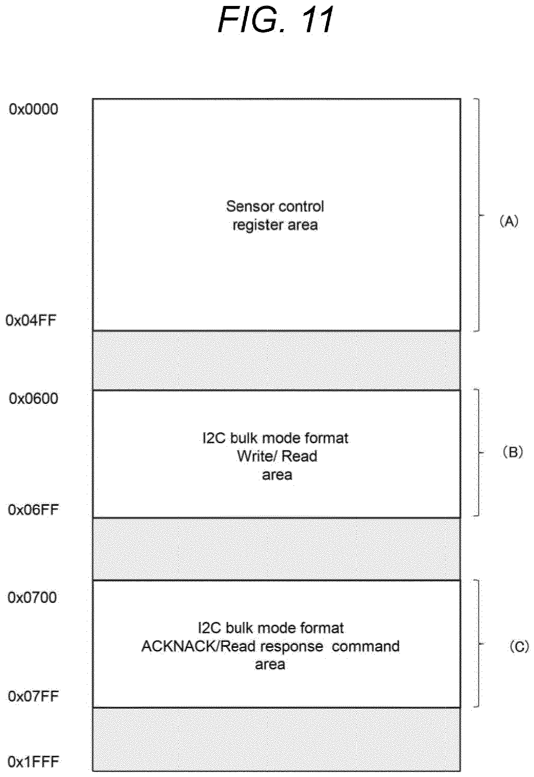

Hereinafter, the operation of the communication system 1 in Fig. 10 will be described in detail. It is assumed that the ECU 10 obtains the address mapping of the register 40-9 of the sensor 50 in advance. Fig. 11 is a diagram illustrating an example of the address mapping of the Register 40-9.

As illustrated in Fig. 11, the register 40-9 includes a sensor control register area (Fig. 11(A)), an I2C bulk mode format Write/Read area (Fig. 11(B)), and an I2C bulk mode format ACKNACK/Read response command area (Fig. 11(C)).

The sensor control register area of Fig. 11(A) is an area for storing register data for controlling the sensor 50. The I2C bulk mode format Write/Read area of Fig. 11(B) is an area for storing data of the I2C bulk mode format for controlling the peripheral device 60 connected to the sensor 50 via the I2C bus in the I2C bulk mode. The I2C bulk mode format is generated by the ECU 10. The I2C bulk mode format ACKNACK/Read response command area of Fig. 11(C) is an area for storing the I2C bulk mode format ACKNACK/Read response command from the peripheral device 60.

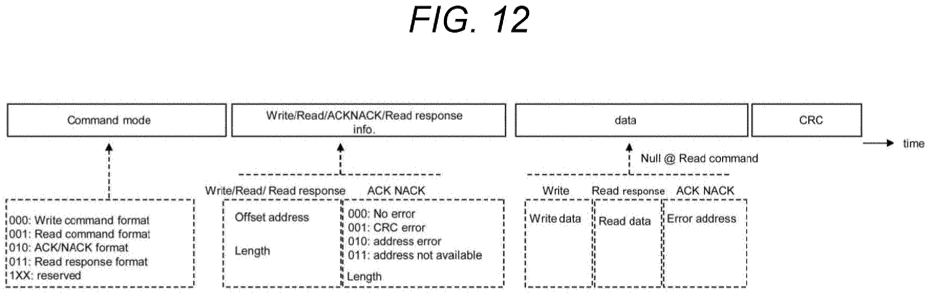

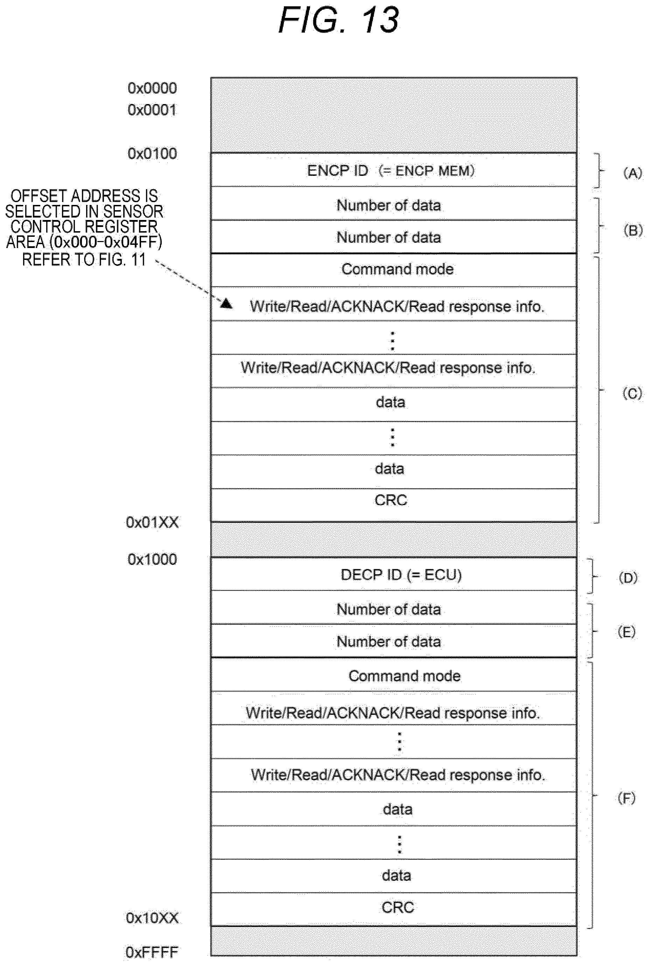

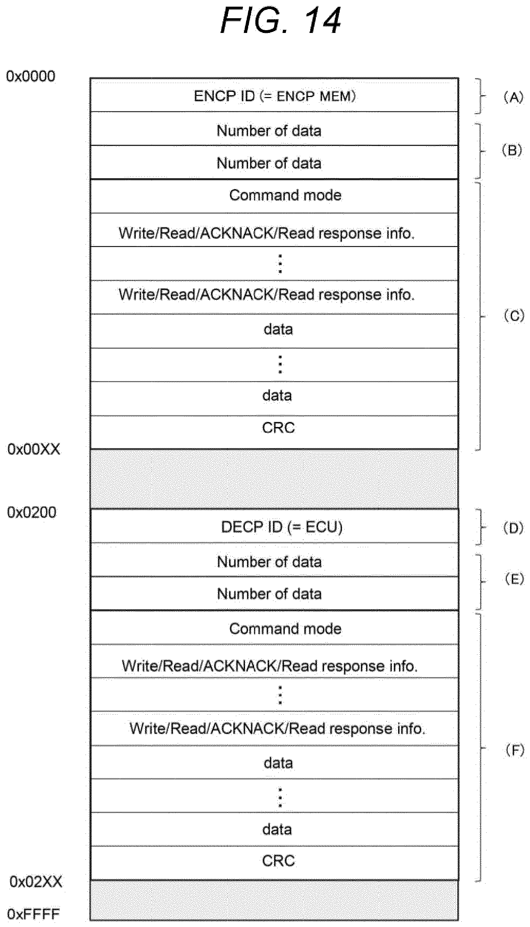

Fig. 12 is a diagram illustrating a data configuration of a memory write/read command packet format transmitted from the SerDes #1 20. Fig. 13 is a diagram illustrating a data configuration of the memory write/read command stored in the memory 10-2 of the ECU 10. Fig. 14 is a diagram illustrating a data configuration of the memory write/read command stored in the buffer memory 20-8 of the SerDes #1 20.

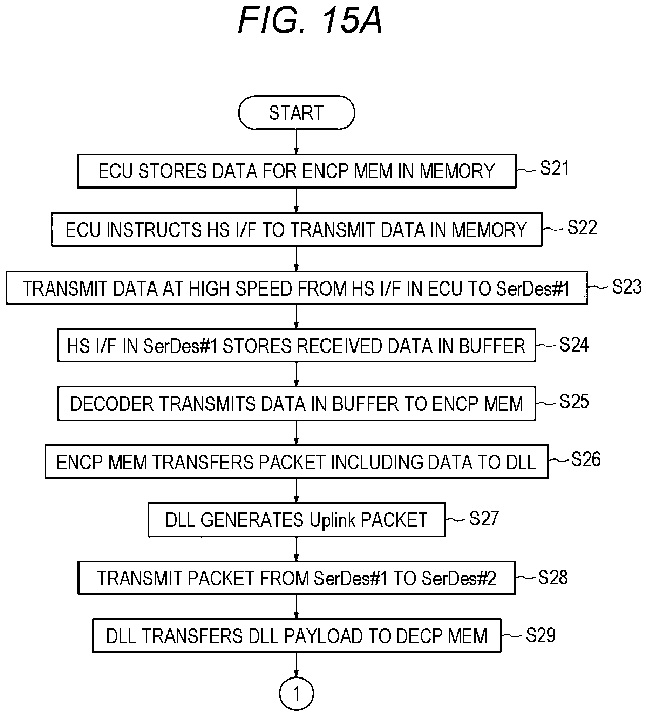

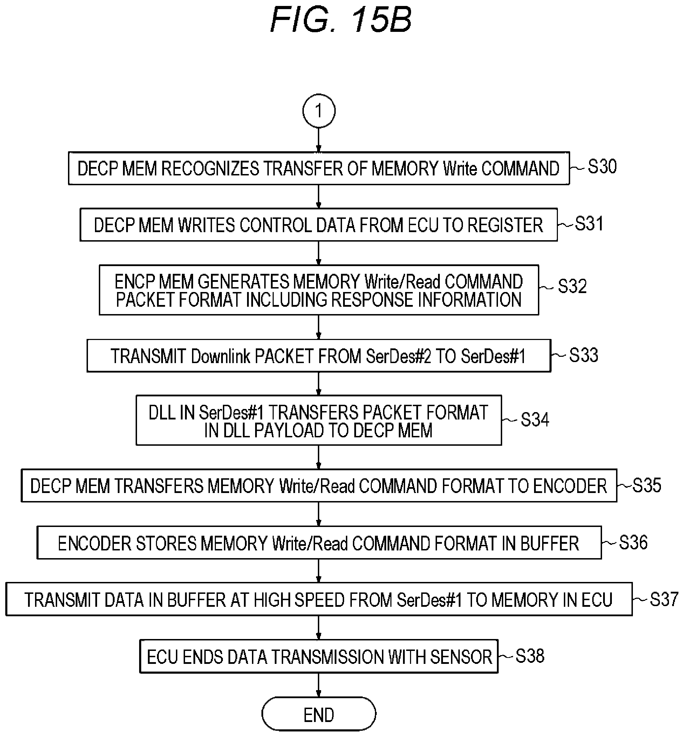

Figs. 15A and 15B are flowcharts illustrating a processing procedure of the communication system 1 according to the second embodiment. First, the ECU 10 stores data to be input to the ENCP MEM 20-11 in the memory 10-2 (Fig. 13 and step S21). The memory 10-2 stores ENCP ID (Fig. 13(A)) that is identification information of the ENCP MEM 20-11, Number of data input to the ENCP MEM 20-11 (Fig. 13(B)), and a memory write/read command format (Fig. 13(C)) including data to be written to the sensor control register area (Fig. 11(A)) of the register 40-9 of the sensor 50.

The write destination address of the sensor control register area (Fig. 11(A)) of the register 40-9 in the sensor 50 is stored in the offset address area (Fig. 12) in the memory write/read command format (Fig. 13(C)) by the ECU 10.

The ECU 10 instructs the HS I/F 10-6 to transfer the data from 0x0100 to 0x01XX on the memory 10-2 (step S22).

The HS I/F 10-6 extracts data of 0x0100 to 0x01XX from the memory 10-2, and sequentially outputs the data to the SerDes #1 20 according to the HS I/F protocol (step S23).

The HS I/F 20-7 of the SerDes #1 20 sequentially receives data from the HS I/F 10-6 of the ECU 10 and stores the data in the buffer memory 20-8 (Fig. 14 and step S24).

The decoder 20-9 reads the data from the buffer memory 20-8 (step S25). At this time, ENCP ID (Fig. 14(A)) described at the head is analyzed, and data is output to the ENCP MEM 20-11 with ENCP ID = ENCP MEM. The decoder 20-9 reads the number of pieces of data indicated by Number of data (Fig. 14(B)) from the buffer memory 20-8, and outputs the number of pieces of data to the ENCP MEM 20-11. In the operation described above, data necessary for data writing is transferred to the ENCP MEM 20-11.

In the similar manner to the general serial communication of the ASA, the ENCP MEM 20-11 stores the received memory write/read command packet format (Fig. 14(C)) in the Packet payload (Fig. 5(B)), attaches the Packet header indicating a packet type or the like, generates the packet format (Fig. 5(B)), and outputs the packet format to the DLL 20-4 (step S26).

The subsequent processing of the DLL 20-4 and PHY 20-5 of the SerDes #1 20 are basically the same as those of the general serial communication of the ASA, but the DLL 20-4 stores information indicating that the output destination of the packet format is the DECP MEM 40-8 in the Container header (Fig. 5(C)) (step S27). An uplink packet conforming to the ASA is transmitted from the SerDes #1 20 to the SerDes #2 40.

The processing of the PHY 40-5 and DLL 40-4 of the SerDes #2 40 incorporated in the sensor 50 is the same as that of the general serial communication of the ASA (step S28).

The DLL 40-4 analyzes the Container header of the link layer container format (Fig. 5(C)) and recognizes that the DLL payload stores data to be output to the DECP MEM 40-8. In accordance with this, the DLL 40-4 outputs the DLL payload (Fig. 5(C)) to the DECP MEM 40-8 (step S29).

The DECP MEM 40-8 analyzes the Packet payload (Fig. 5(B)) and recognizes that the memory write command is transferred in the command mode (Fig. 12) of the memory write/read command format (step S30). Moreover, the subsequent Write/Read/ACKNACK/Read response information (Fig. 12) is analyzed, and the offset address of the register, and a data length are obtained. Therefore, the DECP MEM 40-8 can correctly obtain all the write data.

The DECP MEM 40-8 writes data sequentially from the address described in the offset address into the sensor control register area (Fig. 11(A)) of the register 40-9 (step S31).

When all the data can be completely written without errors, the ENCP MEM (40-7) selects an ACK/NACK format and generates a memory write/read command packet format (Fig. 12) in which No error is stored in ACKNACK information. Moreover, the Packet header is added to generate the packet format (Fig. 5(B)) (step S32).

The processing of the DLL 40-4 and the processing of the PHY 40-5 are the same as those of the general serial communication of the ASA, and the PHY format (Fig. 5(D)) is finally output through the down link (step S33).

The processing of the PHY 20-5 and DLL 20-4 of the SerDes #1 20 are the same as those of the general serial communication of the ASA, but the DLL 20-4 analyzes the Container header and outputs the packet format in the DLL payload to the DECP MEM 20-12 (step S34).

The DECP MEM 20-12 extracts the memory write/read command packet format (Fig. 12) stored in the Packet payload from the packet format and outputs the memory write/read command packet format to the encoder 20-10 (step S35).

The encoder 20-10 generates DECP ID (here, ECU 10) (Fig. 14(D)) and Number of data (Fig. 14(E)) of the memory write/read command packet format (Fig. 12), and outputs the generated DECP ID and Number of data together with the memory write/read command packet format (Fig. 14(F)) to the memory 10-2 area of the buffer memory 20-8 allocated in advance (Fig. 14 and step S36).

The subsequent processing is the same as that after step S13 of the first embodiment, and finally, the ECU 10 confirms No error described in the ACK/NACK information of the memory write/read command packet format (Fig. 13(F)) stored in the memory 10-2, confirms that the control data is transferred to the register 40-9 of the sensor 50, and ends the control data transfer operation (step S37).

Note that in reading data, the command mode of the memory write/read command packet format (Fig. 12) is set to a read command, and transmission to the sensor 50 is performed. The processing procedure of data reading is the same as that described above. Furthermore, in the response to the transmission, the command mode of the memory write/read command packet format (Fig. 12) is set to a read response, and transmission to the SerDes #1 20 is performed. The processing procedure is also the same as that described above.

As described above, in the second embodiment, in a case where the sensor 50 includes the SerDes #2 40, the ECU 10 once stores the control data of the sensor 50 in the memory 10-2, and then stores the control data in the register 40-9 of the SerDes #2 40 from the memory 10-2 via the SerDes #1 20 and the SerDes #2 40. Therefore, the ECU 10 can directly control the sensor 50. Since the ECU 10 and the SerDes #1 20 perform signal transmission through a high-speed interface, the ECU 10 can quickly transmit control data to the sensor 50 and can quickly transmit the acquired data of the sensor 50 to the ECU 10.

### (Third Embodiment)

In the second embodiment described above, the ECU 10 can directly perform writing and reading with respect to the register 40-9 of the sensor 50 including the SerDes #2 40. On the other hand, in a third embodiment to be described below, the ECU 10 can directly write and read data with respect to the peripheral device 60 that performs I2C communication with the sensor 50 including the SerDes #2 40.

A communication system 1 according to the third embodiment has a block configuration similar to that in Fig. 10. The peripheral device 60 has an I2C communication function. The ECU 10 transmits data of the I2C bulk mode format to the peripheral device 60. More specifically, the ECU 10 writes the control data of the I2C bulk mode format to the register 40-9 of the peripheral device 60 via the sensor 50 incorporating the SerDes #1 20 and the SerDes #2 40.

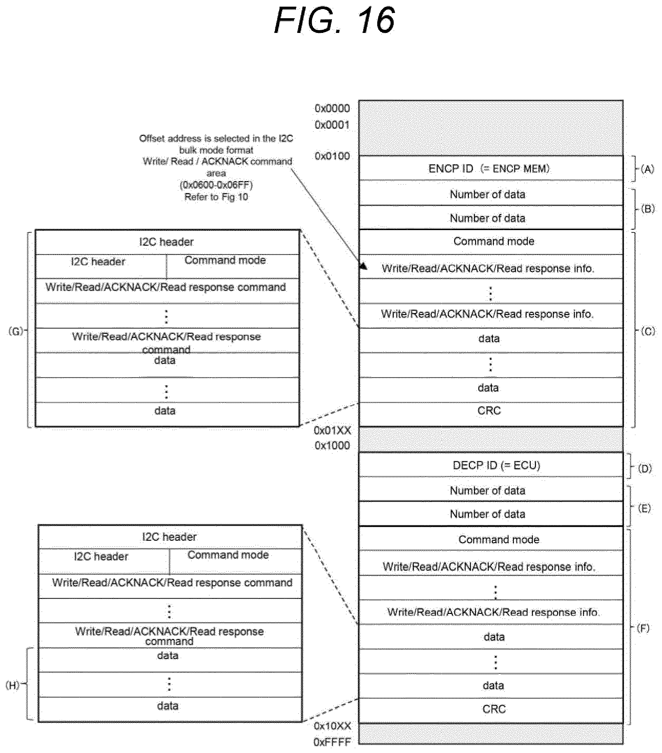

Fig. 16 is a diagram illustrating a memory map when the ECU 10 according to the third embodiment writes data of the I2C bulk mode format to the memory 10-2. The memory 10-2 is provided with an area (Fig. 16(A)) for storing ENCP ID that is identification information of the ENCP MEM 20-11 in the SerDes #1 20, the number of pieces of data input to the ENCP MEM 20-11 (Fig. 16(B)), a memory write/read command format (Fig. 16(C)) including data to be written to the sensor control register area (Fig. 11(A)) of the register 40-9 of the sensor 50, an area (Fig. 16(D)) for storing ENCP ID that is identification information of the ECU 10, the total number of pieces of data input to the ECU 10 (Fig. 16(E)), and an area (Fig. 16(F)) for storing memory write/read response information including data input to the ECU 10. The data configuration of the I2C command format stored in the area of Fig. 16(C) is indicated in Fig. 16(G), and the data configuration of the I2C command format stored in the area of Fig. 16(f) is indicated in Fig. 16(H).

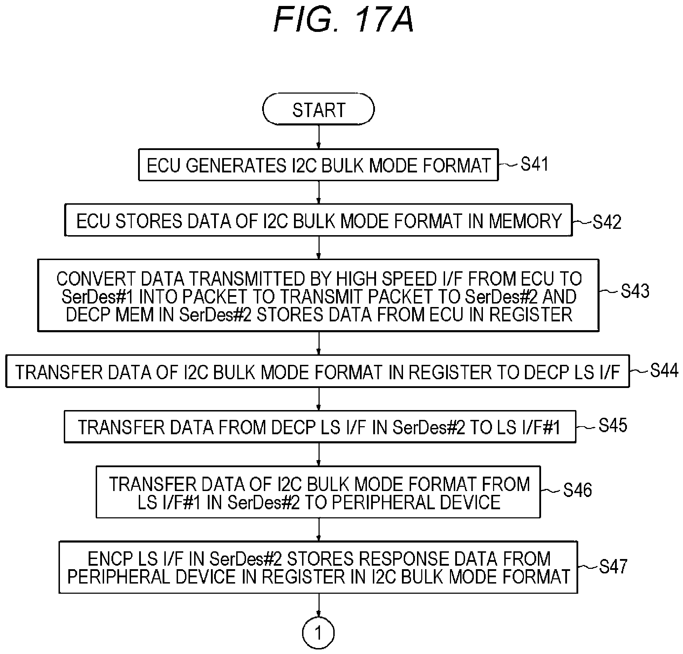

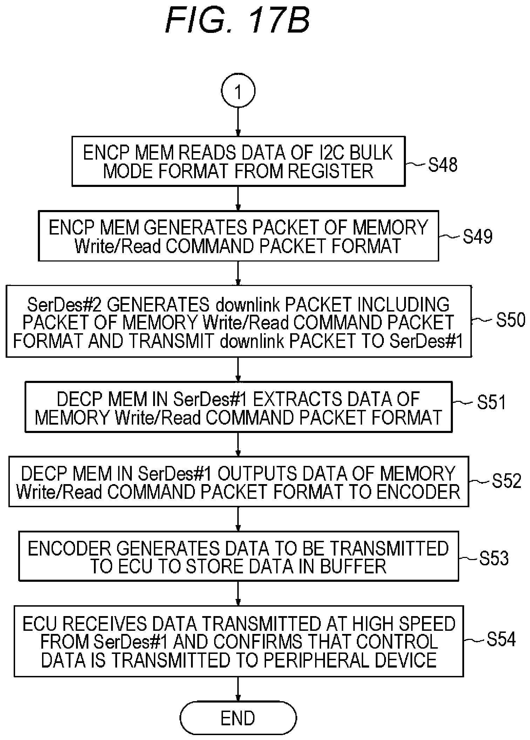

Figs. 17A and 17B are flowcharts illustrating a processing procedure of the communication system 1 according to the third embodiment. First, the ECU 10 stores the slave address of the peripheral device 60 in the slave address of the Write/Read/ACKNACK/Read response command in the I2C bulk mode format (Fig. 3), selects the write command format, stores the write destination address as an offset address, and generates an I2C bulk mode format in which the control data is stored as data (step S41).

The ECU 10 stores data of the I2C bulk mode format for input to the ENCP MEM 20-11 in the memory 10-2 (Fig. 16 and step S42). The ENCP MEM 20-11 as an output destination is stored in the ENCP ID (Fig. 16(A)), and the number of pieces of data to be input to the ENCP MEM 20-11 is stored in Number of data (Fig. 16(B)). In a memory area following the area, the memory write/read command packet format (Fig. 12) for writing to the sensor control register area (Fig. 11(B)) of the register 40-9 of the sensor 50 is stored as a write command format. At this time, data of the previously generated I2C bulk mode format is written in Write data (Fig. 16(G)).

The subsequent procedure of writing to the I2C bulk mode format Write/Read/ACKNACK/Read response command area (Fig. 11(B)) of the register 40-9 of the sensor 50 is the same as the procedure described in the second embodiment (step S43).

The register 40-9 in which the data of the I2C bulk mode format is written outputs the I2C bulk mode format to the DECP LS I/F 40-3 (step S44).

A method by which the DECP LS I/F 40-3 controls the LS I/F #1 40-1 to perform the I2C communication by using the data of the I2C bulk mode format is the same as the normal I2C bulk mode communication (step S45).

The LS I/F #1 40-1 writes control data of the I2C bulk mode format to the peripheral device 60 by the I2C communication (step S46). At the same time, the ENCP LS I/F #1 40-2 stores an ACK signal with which the peripheral device 60 responds through the current I2C communication. When the I2C communication ends, the ENCP LS I/F #1 40-2 generates data of the I2C bulk mode format in which the setting of the ACKNACK command (Fig. 3) in the I2C bulk mode and all the ACKNACK signals are stored in the data, and writes the data in the I2C bulk mode format ACKNACK/Read response command area (Fig. 11(C)) of the register 40-9 (step S47).

The data of the I2C bulk mode format is output to the ENCP MEM 40-7 from the register 40-9 in which the data of the I2C bulk mode format of an ACK/NACK response command is written (step S48).

The ENCP MEM 40-7 generates the memory write/read command packet format (Fig. 12) in which the setting of a read response format and the data of the I2C bulk mode format of the ACK/NACK response command are stored in the data area (step S49).

The packet in the memory write/read command packet format is output through the downlink communication via the DLL 40-4 and the PHY 40-5 in the same manner as the procedure described above (step S50).

The packet of the memory write/read command packet format (Fig. 8(B)) received via the PHY 20-5 and DLL 20-4 of the SerDes #1 20 is transferred to the DECP MEM 20-12 (step S51).

The DECP MEM 20-12 transfers the memory write/read command packet format extracted from the payload to the encoder 20-10 (step S52) .

The encoder 20-10 generates the DECP ID (here, ECU 10) (Fig. 14(D)), the memory write/read command packet format (Fig. 12), and the total number of pieces of data (Fig. 14(E)), and outputs the generated DECP ID, memory write/read command packet format, and the total number of pieces of data together with the memory write/read command packet format (Fig. 14(F)) to the memory 10-2 area of the buffer memory 20-8 allocated in advance (Fig. 14 and step S53).

The subsequent processing is the same as that after step S13 of the first embodiment, and finally, the ECU 10 acquires the ACK/NACK result (Fig. 16(H)) of the I2C bulk mode format described in the data area of the memory write/read command packet format (Fig. 16(F)) stored in the memory 10-2, confirms that the control data is transmitted to the peripheral device 60, and ends the transmission operation of the control data (step S54).

As described above, in the third embodiment, in a case where the peripheral device 60 that performs the I2C communication is connected to the sensor 50 incorporating the SerDes #2 40, the ECU 10 stores the control data of the I2C bulk mode format for the peripheral device 60 in the register 40-9 of the sensor 50. Therefore, the ECU 10 can directly control the peripheral device 60.

### (Fourth Embodiment)

A communication system 1 according to a fourth embodiment can be applied to both a case where the sensor 50 has a function of the SerDes #2 40 and a case where the sensor 50 does not have the function of the SerDes #2 40.

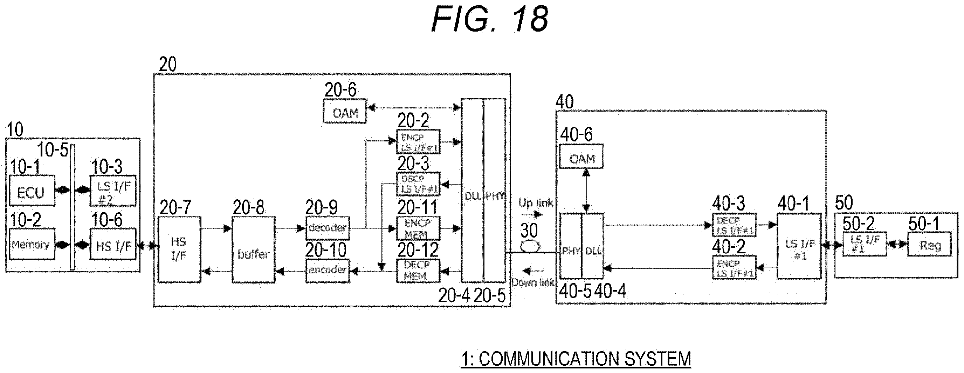

Fig. 18 is a block diagram illustrating a schematic configuration of the communication system 1 including a communication device according to the fourth embodiment. The communication system 1 of Fig. 18 includes an ECU 10 that is a master device 10, a SerDes #1 20 that is a Master SerDes 20, a SerDes #2 40 that is a Slave SerDes 40, and a sensor 50 that is a slave device 50. The internal configuration of the SerDes #1 20 is different from that of the SerDes #1 20 according to the first to third embodiments.

Similarly to the SerDes #1 20 of Fig. 6, the SerDes #1 20 of Fig. 18 includes an ENCP LS I/F #1 20-2, a DECP LS I/F #1 20-3, a DLL 20-4, a PHY 20-5, an CAM 20-6, a HS I/F 20-7, a buffer memory 20-8, a decoder 20-9, and an encoder 20-10. In addition, the SerDes #1 20 of Fig. 18 includes an ENCP MEM 20-11 and a DECP MEM 20-12.

Therefore, high-speed serial communication conforming to the ASA can be performed in a case where the SerDes #2 40 without a register as illustrated in Figs. 6 and 18 is connected and a case where the SerDes #2 40 having a register 40-9 as illustrated in Fig. 10 is connected.

Note that the present technology can have the following configurations.
(1) A communication device including:
   a communication interface unit configured to receive, from a master, control data including data of a predetermined transmission format of a first protocol which a communication partner device transmits to a slave;
   a storage unit configured to store the data of the first protocol received by the communication interface unit;
   an encapsulator configured to convert the data of the first protocol stored in the storage unit into data of a second protocol; and
   a communication unit configured to transmit the data of the second protocol converted by the encapsulator to the communication partner device.
(2) The communication device according to (1), in which the predetermined transmission format is a format in which an ACK signal or a NACK signal from the communication partner device is received after transmission of data of multiple bytes to the communication partner device is completed.
(3) The communication device according to (2), in which the predetermined transmission format of the first protocol is an I2C bulk mode format defined in an Automotive SerDes Alliance (ASA) standard ver. 1.01.
(4) The communication device according to (3), in which the storage unit stores the control data including identification information of the encapsulator, the number of pieces of data, and information of the I2C bulk mode format.
(5) The communication device according to any one of (1) to (4), in which a data transmission speed of the communication interface unit is faster than a data transmission speed between the communication partner device and the slave.
(6) The communication device according to any one of (1) to (5), further including a decapsulator configured to convert the data of the second protocol transmitted from the communication partner device and received by the communication unit into the data of the first protocol and store the converted data in the storage unit.
(7) A communication system including:
   a first communication device configured to perform data communication of a first protocol with a master; and
   a second communication device configured to perform data communication of a second protocol with the first communication device and perform data communication of the first protocol with a slave,
   in which the first communication device includes
   a first communication interface unit configured to receive, from the master, control data including data of a predetermined transmission format of the first protocol which the second communication device transmits to the slave,
   a first storage unit configured to store the data of the first protocol received by the first communication interface unit,
   a first encapsulator configured to convert the data of the first protocol stored in the first storage unit into data of a second protocol, and
   a first communication unit configured to transmit the data of the second protocol converted by the first encapsulator to the second communication device.
(8) The communication system according to (7), further including a first decapsulator configured to convert the data of the second protocol transmitted from the second communication device and received by the first communication unit into the data of the first protocol and store the converted data in the first storage unit.
(9) The communication system according to (7) or (8), in which the predetermined transmission format of the first protocol is an I2C bulk mode format defined in an ASA standard ver. 1.01.
(10) The communication system according to any one of (7) to (9), in which a data transmission speed of the first communication interface unit is faster than a data transmission speed between the second communication device and the slave.
(11) The communication system according to any one of (7) to (10), in which the second communication device includes:
   a second communication unit configured to receive the data of the second protocol transmitted from the first communication device; and
   a second decapsulator configured to convert the data of the second protocol received by the second communication unit into the data of the first protocol; and
   a second communication interface unit configured to transmit the data of the first protocol converted by the second decapsulator to the slave.
(12) The communication system according to (11), in which the second communication device includes a second encapsulator configured to convert the data of the first protocol transmitted by the slave and received by the second communication interface unit into the data of the second protocol, and
   the second communication unit transmits the data of the second protocol converted by the second encapsulator to the first communication device.
(13) The communication system according to any one of (7) to (12), in which the master includes:
   a second storage unit configured to store the control data including the data of the first protocol which the second communication device is to transmit to the slave; and
   a third communication interface unit configured to transmit the control data stored in the second storage unit to the first communication device.
(14) The communication system according to any one of (7) to (13), further including an internal slave incorporated in the second communication device and directly controlled by the master,
   in which the second communication device includes a third storage unit configured to store data for the master to directly control the internal slave.
(15) The communication system according to (14), in which the third storage unit stores the data of the first protocol to be transmitted to the slave.
(16) The communication system according to (14) or (15), in which the first communication device includes:
   a third encapsulator configured to convert data from the master, which is stored in the first storage unit, into the data of the second protocol; and
   a third decapsulator configured to perform protocol conversion on data of the internal slave, which is received by the first communication unit and read from the third storage unit, and
   the second communication device stores data output from the third encapsulator in the third storage unit.
(17) A communication method including:
   by communication interface unit, receiving, from a master, control data including data of a predetermined transmission format of a first protocol which a communication partner device transmits to a slave;
   storing the data of the first protocol received by the communication interface unit in a storage unit;
   converting the data of the first protocol stored in the storage unit into data of a second protocol; and
   transmitting the converted data of the second protocol to the communication partner device.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

### REFERENCE SIGNS LIST

- 1: Communication system
- 10: ECU
- 10-1: ECU core
- 10-2: Memory
- 10-3: Second low-speed interface unit (LS I/F #2)
- 10-4: First low-speed interface unit (LS I/F #1)
- 20: SerDes #1
- 20-1: Low-speed interface unit (LS I/F #1)
- 20-2: Encapsulator (ENCP LS I/F #1)
- 20-3: Decapsulator (DECP LS I/F #2)
- 20-8: Buffer memory
- 20-9: Decoder
- 20-10: Encoder (ENCP MEM)
- 20-11: Encapsulator (ENCP LS I/F #1)
- 20-12: Decapsulator (DECP MEM)
- 30: Cable
- 40: SerDes #2
- 40-1: Low-speed interface unit (LS I/F #1)
- 40-2: Encapsulator (ENCP LS I/F #2)
- 40-3: Decapsulator (DECP LS I/F #1)
- 40-6: CAM unit
- 40-7: ENCP MEM
- 40-8: DECP MEM
- 40-9: Register
- 50: Slave device
- 50: Sensor
- 50: Image sensor
- 50-1: Register
- 50-2: Low-speed interface unit (LS I/F #1)
- 60: Peripheral device

## Claims

1. A communication device comprising:
a communication interface unit configured to receive, from a master, control data including data of a predetermined transmission format of a first protocol which a communication partner device transmits to a slave;
a storage unit configured to store the data of the first protocol received by the communication interface unit;
an encapsulator configured to convert the data of the first protocol stored in the storage unit into data of a second protocol; and
a communication unit configured to transmit the data of the second protocol converted by the encapsulator to the communication partner device.

2. The communication device according to claim 1, wherein the predetermined transmission format is a format in which an ACK signal or a NACK signal from the communication partner device is received after transmission of data of multiple bytes to the communication partner device is completed.

3. The communication device according to claim 2, wherein the predetermined transmission format of the first protocol is an I2C bulk mode format defined in an Automotive SerDes Alliance (ASA) standard ver. 1.01.

4. The communication device according to claim 3, wherein the storage unit stores the control data including identification information of the encapsulator, the number pieces of data, and information of the I2C bulk mode format.

5. The communication device according to claim 1, wherein a data transmission speed of the communication interface unit is faster than a data transmission speed between the communication partner device and the slave.

6. The communication device according to claim 1, further comprising a decapsulator configured to convert the data of the second protocol transmitted from the communication partner device and received by the communication unit into the data of the first protocol and store the converted data in the storage unit.

7. A communication system comprising:
a first communication device configured to perform data communication of a first protocol with a master; and
a second communication device configured to perform data communication of a second protocol with the first communication device and perform data communication of the first protocol with a slave,
wherein the first communication device includes
a first communication interface unit configured to receive, from the master, control data including data of a predetermined transmission format of the first protocol which the second communication device transmits to the slave,
a first storage unit configured to store the data of the first protocol received by the first communication interface unit,
a first encapsulator configured to convert the data of the first protocol stored in the first storage unit into data of a second protocol, and
a first communication unit configured to transmit the data of the second protocol converted by the first encapsulator to the second communication device.

8. The communication system according to claim 7, further comprising a first decapsulator configured to convert the data of the second protocol transmitted from the second communication device and received by the first communication unit into the data of the first protocol and store the converted data in the first storage unit.

9. The communication system according to claim 7, wherein the predetermined transmission format of the first protocol is an I2C bulk mode format defined in an ASA standard ver. 1.01.

10. The communication system according to claim 7, wherein a data transmission speed of the first communication interface unit is faster than a data transmission speed between the second communication device and the slave.

11. The communication system according to claim 7, wherein the second communication device includes:
a second communication unit configured to receive the data of the second protocol transmitted from the first communication device; and
a second decapsulator configured to convert the data of the second protocol received by the second communication unit into the data of the first protocol; and
a second communication interface unit configured to transmit the data of the first protocol converted by the second decapsulator to the slave.

12. The communication system according to claim 11, wherein the second communication device includes a second encapsulator configured to convert the data of the first protocol transmitted by the slave and received by the second communication interface unit into the data of the second protocol, and
the second communication unit transmits the data of the second protocol converted by the second encapsulator to the first communication device.

13. The communication system according to claim 7, wherein the master includes:
a second storage unit configured to store the control data including the data of the first protocol which the second communication device is to transmit to the slave; and
a third communication interface unit configured to transmit the control data stored in the second storage unit to the first communication device.

14. The communication system according to claim 7, further comprising an internal slave incorporated in the second communication device and directly controlled by the master,
wherein the second communication device includes a third storage unit configured to store data for the master to directly control the internal slave.

15. The communication system according to claim 14, wherein the third storage unit stores the data of the first protocol to be transmitted to the slave.

16. The communication system according to claim 14, wherein the first communication device includes:
a third encapsulator configured to convert data from the master, which is stored in the first storage unit, into the data of the second protocol; and
a third decapsulator configured to perform protocol conversion on data of the internal slave, which is received by the first communication unit and read from the third storage unit, and
the second communication device stores data output from the third encapsulator in the third storage unit.

17. A communication method comprising:
by communication interface unit, receiving, from a master, control data including data of a predetermined transmission format of a first protocol which a communication partner device transmits to a slave;
storing the data of the first protocol received by the communication interface unit in a storage unit;
converting the data of the first protocol stored in the storage unit into data of a second protocol; and
transmitting the converted data of the second protocol to the communication partner device.
